Europäisches Patentamt

European Patent Office

Office européen des brevets

(11) Publication number: **0 096 417**
**B1**

# EUROPEAN PATENT SPECIFICATION

(45) Date of publication of patent specification: **08.04.87**

(21) Application number: **83105626.2**

(22) Date of filing: **08.06.83**

(51) Int. Cl.⁴: **G 01 N 27/48,** G 01 N 27/54, G 01 N 27/30, G 01 N 33/18, G 01 N 33/00, G 01 N 27/46

(54) **Apparatus for measuring dissolved hydrogen concentration.**

(30) Priority: **09.06.82 JP 97685/82**

(43) Date of publication of application:
**21.12.83 Bulletin 83/51**

(45) Publication of the grant of the patent:
**08.04.87 Bulletin 87/15**

(84) Designated Contracting States:
**CH DE FR GB IT LI NL SE**

(56) References cited:
**US-A-3 325 378**
**US-A-3 503 861**
**US-A-3 509 034**
**US-A-3 565 769**
**US-A-3 992 267**
**US-A-4 364 810**

**JOURNAL OF ANALYTICAL CHEMISTRY, vol.
53, 1981, S. SRINIVASAN et al. "Adaptation of
Clark oxygen electrode for monitoring
hydrogen gas", pages 928, 929**

(73) Proprietor: **HITACHI, LTD.**
**6, Kanda Surugadai 4-chome Chiyoda-ku
Tokyo 100 (JP)**

(73) Proprietor: **Hitachi Engineering Co., Ltd.**
**2-1, Saiwai-cho 3-chome
Hitachi-shi Ibaraki 317 (JP)**

(72) Inventor: **Ozawa, Yoshihiro**
**2066-10, Senbacho
Mito-shi (JP)**
Inventor: **Uchida, Shunsuke**
**10-52, Nishinarusawacho-1-chome
Hitachi-shi (JP)**
Inventor: **Nakayama, Norio**
**13-1, Osecho-3-chome
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

This invention relates to an apparatus for measuring the concentration of dissolved hydrogen in water samples, particularly from nuclear reactors such as light water reactors, heavy water reactors, etc.

According to the art so far in practical use, hydrogen is diffused into a gas phase from metallic sodium in the sodium loop of a fast breeder reactor through a hydrogen-permeable metallic membrane made of Pd, Ni, etc. and the concentration of dissolved hydrogen is detected by a heat conductivity detector, etc. Since the vapor pressure of metallic sodium is less than 0,1 MPa, there is no fear of breaking the membrane in the normal use. However, in measuring the concentration of dissolved hydrogen in core water there is the risk of breaking the hydrogen-permeable metallic membrane because of the high vapor pressure of water (for example, 6,9 MPa at 285°C). Thus, the concentration of dissolved hydrogen cannot be measured without additional operations such as pressure reduction, cooling, etc., of the water sample.

US—A—3 992 267 describes an electrochemical cell comprising an anode, a cathode and a reference electrode and an aqueous electrolyte for detection of gases in air, particularly CO in oxygen containing atmospheres, whereby the gas to be measured is passed directly over the anode. This prior art does not deal with the problem of the influence of pressure variations on the measured current or the application of the cell under high gas pressures.

US—A—3 503 861 discloses an electrochemical apparatus of the type of a polarographic cell including a porous diaphragm for the determination of gases, particularly $O_2$, in gaseous phases under variable pressures. For that purpose, and for protecting the diaphragm, the inside of the electrochemical cell is pressurized with a spring which acts on the electrolyte. This is obtained either with a spring-loaded piston (Figs. 1 and 2 of this reference) or by means of a bellow-like additional diaphragm (Fig. 4 of this reference), whereby a pressure equalization between the electrolyte and the outer gas atmosphere is achieved. This electrochemical cell is not applicable to the $H_2$-determination in water samples under high pressures.

A polarographic hydrogen detector comprising an anode, a cathode, a reference electrode, a hydrogen-permeable membrane and a sulfate electrolyte is known from US—A—3 509 034. Also this prior art apparatus is specifically designed for the measurement of gaseous mixtures and not of liquids. Means for equalizing the inside pressure of the electrolyte and the pressure of the outer atmosphere are not provided.

It is an object of the present invention to provide an apparatus for directly measuring the concentration of dissolved hydrogen in hot water samples without additional operations such as pressure reduction, cooling, etc., of the water sample.

This object is achieved according to claim 1. The dependent claims refer to preferred embodiments.

The invention will be further explained in the following description with reference to the accompanying drawings.

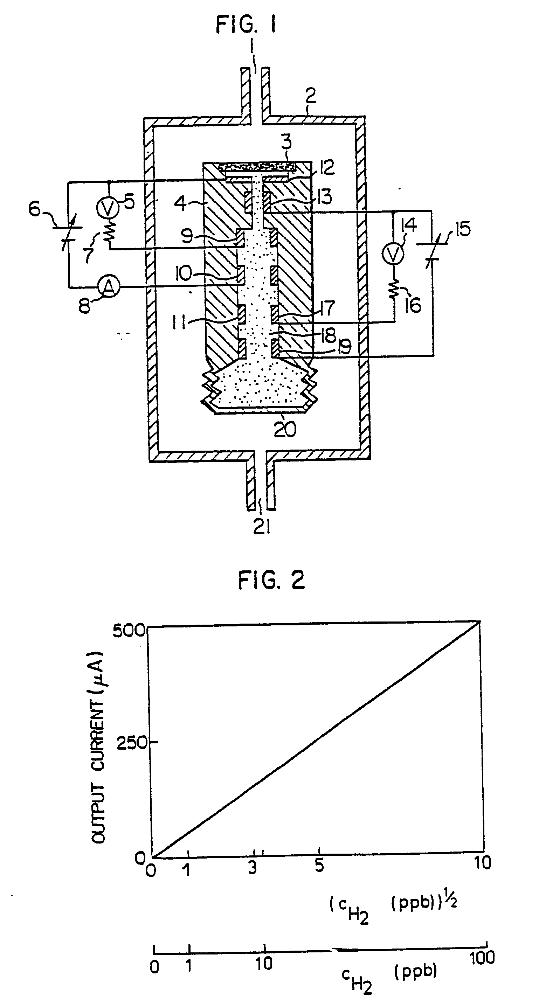

Fig. 1 is a vertical cross-sectional schematic view of the basic structure according to the present invention.

Fig. 2 is a diagram showing the relation between the output current of an apparatus according to the present invention and the concentration of dissolved hydrogen of a water sample.

To measure the concentration of dissolved $H_2$ of a hot water sample, the present invention is based on the following structure. The electrochemical cell comprising a hydrogen-permeable membrane, an electrolyte solution, electrodes and bellows is completely surrounded by hot sample water introduced into a container in which the electrochemical cell is disposed. The bellows serve not only to absorb the thermal expansion of the electrolyte solution, but also to keep a pressure balance between the sample water around the electrochemical cell and the electrolyte solution, thereby preventing the hydrogen-permeable membrane, etc., from breakage. A reference electrode, an anode, a cathode, etc. are provided in contact with the electrolyte solution in electrochemical cell, the reference electrode being made of a material that will not undergo decomposition at a high temperature with a stable electric potential and a high reliability and will not require any presence of ions, substances, etc. having a lower oxidation potential than $H_2$ in the electrolyte solution. The anode is kept at a constant potential with respect to the reference electrode. The dissolved hydrogen in the hot water sample is extracted into the electrolyte solution in the hydrogen electrode through the hydrogen-permeable membrane, and is oxidized at the anode kept at a constant potential with respect to the reference electrode. The dissolved hydrogen concentration of the water sample can be quantitatively determined from the resulting output current.

One embodiment of an apparatus for measuring the concentration of dissolved hydrogen according to the present invention will be described in detail below, referring to Figs. 1 and 2.

In Fig. 1 a vertical cross-sectional, schematic view of an apparatus for measuring the dissolved $H_2$ concentration of a hot water sample under high pressure, which may be hereinafter referred to as "high temperature, high pressure type dissolved $H_2$ meter", is shown. The high temperature, high pressure type dissolved hydrogen meter comprises a sensor body *4*, a sensor-encasing container *2* and an outside electric circuit comprising a voltmeter *5*, a voltmeter *14*, a resistor *7*, a resistor *16*, a cell *6*, a cell *15*, an ammeter *8*, and being connected to electrodes in the sensor body *4*. The sensor body *4* has a hydrogen-permeable membrane *3* on its surface and an electrolyte solution *18* filled therein.

An anode *12*, a protective electrode *13*, a reference electrode *9*, a cathode *10*, a reference electrode *11*, and a cathode *19* are provided at the inner side of the sensor body *4* which are in contact with the electrolyte solution *18*. The sensor body *4* is also provided with a bellows *20* communicating with the electrolyte solution *18* to absorb a thermal expansion of the electrolyte solution. The water sample is introduced into the container *2* through a sample water inlet *1* and discharged through a sample water outlet *21*. The container *2* is filled with sample water, and the entire sensor body *4* is immersed in the sample water. Thus, a pressure balance is always kept between the sample water and the electrolyte solution, and there is no risk of breaking the sensor body *4* and the hydrogen-permeable membrane *3*. $H_2$ in the water sample introduced into the container *2* through the sample water inlet *1* permeates the hydrogen-permeable membrane *3* made of Pd and enters into the electrolyte solution *18* in the sensor body *4*. An aqueous solution of $H_2SO_4$ and $CuSO_4$ is used as the electrolyte solution. The $H_2$ in the electrolyte solution reaches the anode *12*. The anode *12* is adjusted to a constant potential $V_1$ which is lower than the oxidation potential of $SO_4^{2-}$ and higher than the oxidation potential of $H_2$, with respect to the reference electrode *9* consisting of the system $Ag/Ag_2SO_4$ or $Pb/PbSO_4$, by means of the cell *6* while monitoring the voltmeter *5* through the resistor *7*. The $Ag/Ag_2SO_4$ or $Pb/PbSO_4$ reference electrode will not undergo decomposition even above 250°C and has high stability and high reliability. At and by the anode *12*, the hydrogen is oxidized into hydrogen ions according to reaction (1):

$$H_2 \to 2H^+ + 2e^- \qquad (1)$$

At the cathode, reaction (2) proceeds at the same time:

$$Cu^{2+} + 2e^- \to Cu \qquad (2)$$

$SO_4^{2-}$ has a higher oxidation potential than $H_2$, and thus has a potential region failing to undergo oxidation. That is, no disturbing current due to the oxidation reaction of $SO_4^{2-}$ develops. The output current between the anode *12* and the cathode *10* is measured by the ammeter *8*, and the dissolved hydrogen concentration of the water sample is quantitatively determined from this output current value. The current value depends upon the hydrogen permeation rate through the Pd membrane, and is proportional to the square root of the dissolved hydrogen concentration of the water sample. Thus, a proportional relationship is established between the output current value and the one-half power of the dissolved hydrogen concentration.

In Fig. 2, the relationship between the output current value and the concentration of dissolved hydrogen $CH_2$ is shown for measurements at a sample water temperature of 250°C with a Pd membrane of a thickness of 100 μm.

In Fig. 1, the sensor body *4* is further provided with a protective electrode *13* to remove substances oxidizable at the anode other than hydrogen, which may exist in the electrolyte solution *18* in the sensor body *4* or enter the electrolyte solution from the water sample. The protective electrode *13* is adjusted to the same potential $V_1$ as at the anode, with respect to the reference electrode *17* using an $Ag/Ag_2SO_4$ or $Pb/PbSO_4$ electrode, by means of a cell *15* while monitoring the voltmeter *14* through the resistor *16*. By the protective electrode *13*, substances oxidizable at potentials lower than the oxidation potential of $H_2$ are oxidized in advance in the electrolyte solution to prevent any occurrence of a disturbing current to the anode. At the cathode *19* connected to the protective electrode *13* through the cell *15*, reaction (2) proceeds, corresponding to the oxidation reaction at the protective electrode *13*, and an electric current flows between the protective electrode *13* and the cathode *19*.

The protective electrode *13* and the anode *12* are made of a metal having a higher corrosion potential than the oxidation potential of $H_2$, for example, gold, platinum, platinum black, etc. Cathodes *10* and *19* are made of gold, platinum, or a metal equivalent to the metal to be deposited from the electrolyte solution, for example, Ni in the present embodiment. In the present embodiment, Pd having a distinguished radioactive resistance is used for the hydrogen-permeable membrane *3*, but other hydrogen-permeable metals such as Ni, etc., and heat-resistant polymers such as tetrafluoroethylene resins, silicone rubbers, polyimides, etc. can be used. In the present embodiment, a sulfuric acid-acidified $CuSO_4$ solution is used as the electrolyte solution, but in place of $CuSO_4$, other sulfates such as $FeSO_4$, $NiSO_4$, etc. can be used, or aqueous solutions of these sulfates containing no sulfuric acid can be also used. When the metal ion of a sulfate is represented by M and the sulfate by $M_i^+(SO_4^{2-})_{i \cdot j/2}$, the reaction occurring at the cathode *10* and the cathode *19* is given by the following equation (3):

$$M^{i+} + je^- \to M \qquad (3)$$

The substance to be reduced at the cathodes is not limited to metallic cations. Substances inoxidizable at the anode, for example, $O_2$ or $(NH_4^+)_2SO_4^{2-}$, can be dissolved in the electrolyte solution. Any material can be used for the reference electrode, as long as it will not undergo decomposition at a high temperature, has a stable potential and a high reliability and will not require presence of substances or ions having a lower oxidation potential than that of $H_2$ in the electro-

lyte solution. Any electrolyte solution can be used, as long as it contains ions, substances, etc. necessary for the reference electrode to be used at a high temperature, and contains no substances having a lower oxidation potential than that of $H_2$. Examples for such reference electrode-electrolyte solution systems are an $Ag/Ag_3PO_4$ reference electrode using an aqueous solution of phosphoric acid and a phosphate as an electrolyte solution, an $O_2$-Pt/$H^+$, $H_2O$ reference electrode or $O_2$-Pt/$OH^-$, $H_2O$ reference electrode using an aqueous solution of dissolved $O_2$ as an electrolyte solution.

The apparatus according to the invention, which has been described with reference to the measurement of dissolved $H_2$, can also be used for the measurement of the concentration of dissolved atomic hydrogen.

In the foregoing embodiment, the dissolved $H_2$ concentration in a hot water sample can be directly measured without cooling and pressure reduction of the water sample.

Since the concentration of dissolved hydrogen of the water sample can be directly measured without cooling and pressure reduction of the hot water sample, there is no time lag in the order of minutes due to pressure-reducing and cooling operations. Thus, when the apparatus according to the present invention is used for the hydrogen determination in light water nuclear reactors, the conventional measuring procedure which does not allow an exact quantitative determination of the hydrogen concentration due to a decrease in the hydrogen concentration owing to reactions proceeding in the order of seconds, such as recombination reaction of $H_2$ with coexisting $H_2O_2$ in core water, can be greatly improved. Since the concentration of dissolved hydrogen of core water can be exactly measured at a high temperature, the present invention is very effective for controlling hydrogen dosage, water quality, etc.

## Claims

1. An apparatus for measuring the concentration of dissolved hydrogen in water samples, characterized by

(a) a container (2) which comprises a sample water inlet (1) and a sample water outlet (21) and is to be filled with sample water for measurement,

(b) a closed sensor body (4) which is provided in the interior of the container (2) and comprises

(b1) a hydrogen-permeable membrane (3) disposed on the surface of the sensor body (4) and having its outer surface in contact with the water sample in the container (2),

(b2) a measurement electrode system comprising
an anode (12),
a cathode (10) and
a reference electrode (9),
disposed in the interior of the sensor body (4),

(b3) a protective electrode system comprising
a protective electrode (13),

a cathode (19) and
a further reference electrode (17),
disposed in the interior of the sensor body (4),

(b4) an electrolyte solution (18) contained in the interior of the sensor body (4) and which is in contact with the inner surface of the hydrogen permeable membrane (3) and the electrodes (9, 10, 12, 13, 17, 19) and

(b5) bellows (20) having their inner surface in contact with the electrolyte solution (18) and having their outer surface in contact with the water sample in the container (2), and

(c) means (8) for measuring the electric current generated by the oxidation of hydrogen at the anode (12).

2. The apparatus according to claim 1, characterized in that the hydrogen-permeable membrane (3) is made of Pd.

3. The apparatus according to claim 1 or 2, characterized in that the electrolyte solution (18) is an aqueous solution of $H_2SO_4$ and $CuSO_4$ or $NiSO_4$.

4. The apparatus according to one of claims 1 to 3, characterized in that the reference electrodes (9, 17) are $Ag/Ag_2SO_4$ or $Pb/PbSO_4$ electrodes.

5. The apparatus according to claim 3 or 4, characterized in that means (5, 6, 7) are provided for adjusting the anode (12) to a constant potential $(V_1)$ lower than the oxidation potential of $SO_4^{2-}$ and higher than the oxidation potential of $H_2$ with respect to the reference electrode (9), and means (14, 15, 16) are provided for adjusting the protective electrode (13) to the same potential $(V_1)$ as at the anode (12) with respect to the further reference electrode (17).

6. The apparatus according to one of claims 1 to 6, characterized in that the anode (12) and the protective electrode (13) are made of a metal having a higher corrosion potential than the oxidation potential of $H_2$.

7. Use of the apparatus according to one of claims 1 to 6 for measuring the concentration of dissolved atomic and molecular hydrogen.

8. Use of the apparatus according to one of claims 1 to 6 for measuring the concentration of dissolved hydrogen in core water of nuclear reactors.

## Patentansprüche

1. Vorrichtung zur Bestimmung der Konzentration von gelöstem Wasserstoff in Wasserproben, gekennzeichnet durch

(a) einen Behälter (2) mit einem Wasserprobenzufluss (1) und einem Wasserprobenabfluss (21), der mit der zu bestimmenden Wasserprobe gefüllt wird,

(b) einen geschlossenen Sensorkörper (4) im Inneren des Behälters (2) mit

(b1) einer wasserstoffdurchlässigen Membran (3) auf der Oberfläche des Sensorkörpers (4), deren Aussenfläche mit der Wasserprobe im Behälter (2) in Berührung ist,

(b2) einem Messelektrodensystem mit
einer Anode (12),
einer Kathode (10) und
einer Bezugselektrode (9)
im Inneren des Sensorkörpers (4),

(b3) einem Schutzelektrodensystem mit
einer Schutzelektrode (13),
einer Kathode (19) und
einer weiteren Bezugselektrode (17)
im Inneren des Sensorkörpers (4),

(b4) einer Elektrolytlösung (18) im Inneren des Sensorkörpers (4), die mit der Innenfläche der wasserstoffdurchlässigen Membran (3) und den Elektroden (9, 10, 12, 13, 17, 19) in Berührung ist, und

(b5) Druckausgleicher (20), deren Innenfläche mit der mit der Elektrolytlösung (18) in Berührung ist und deren Aussenfläche mit der Wasserprobe im Behälter (2) in Berührung ist, und

(c) Vorrichtungen (8) zur Bestimmung des an der Anode (12) durch die Oxidation des Wasserstoffs erzeugten elektrischen Stroms.

2. Vorrichtung nach Anspruch 1, dadurch gekennzeichnet, daß die wasserstoffdurchlässige Membran (3) aus Pd ist.

3. Vorrichtung nach Anspruch 1 oder 2, dadurch gekennzeichnet, daß die Elektrolytlösung (18) eine wäßrige Lösung von $H_2SO_4$ und $CuSO_4$ oder $NiSO_4$ ist.

4. Vorrichtung nach einem der Ansprüche 1 bis 3, dadurch gekennzeichnet, daß die Bezugselektroden (9, 17) $Ag/Ag_2SO_4$- oder $Pb/PbSO_4$-Elektroden sind.

5. Vorrichtung nach Anspruch 3 oder 4, dadurch gekennzeichnet, daß Vorrichtungen (5, 6, 7) zur Einstellung der Anode (12) auf ein konstantes Potential ($V_1$), das niedriger als das Oxidationspotential von $SO_4^{2-}$ und höher als das Oxidationspotential von $H_2$ inbezug auf die Bezugselektrode (9) ist, und Vorrichtungen (14, 15, 16) zur Einstellung der Schutzelektrode (13) auf das gleiche Potential ($V_1$) wie die Anode (12) inbezug auf die weitere Bezugselektrode (17) vorgesehen sind.

6. Vorrichtung nach einem der Ansprüche 1 bis 6, dadurch gekennzeichnet, daß die Anode (12) und die Schutzelektrode (13) aus einem Metall mit einem höheren Korrosionspotential als das Oxidationspotential von $H_2$ sind.

7. Verwendung der Vorrichtung nach einem der Ansprüche 1 bis 6, zur Bestimmung der Konzentration von gelöstem atomaren oder molekularen Wasserstoff.

8. Verwendung der Vorrichtung nach einem der Ansprüche 1 bis 6, zur Bestimmung der Konzentration des gelösten Wasserstoffs im Kernwasser von Kernreaktoren.

**Revendications**

1. Appareil pour mesurer la concentration d'hydrogène dissous dans des échantillons d'eau, caractérisé par

(a) un conteneur (2) qui comporte une admission (1) pour l'échantillon d'eau et une sortie (21) pour l'échantillon d'eau et doit être rempli par un échantillon d'eau pour la mesure,

(b) un corps fermé formant capteur (14), qui est prévu à l'intérieur du conteneur (2) et comporte

(b1) une membrane (3) perméable à l'hydrogène et disposée sur la surface du corps formant capteur (4) et dont la surface extérieure est en contact avec l'échantillon d'eau situé dans le conteneur (2),

(b2) un système d'électrodes de mesure comprenant
une anode (12),
une cathode (10), et
une électrode de référence (9),
disposées à l'intérieur du corps formant capteur (4),

(b3) un système d'électrodes de protection comprenant
une électrode de protection (13),
une cathode (19), et
une autre électrode de référence (17),
disposées à l'intérieur du corps formant capteur (4),

(b4) une solution d'électrolyte (18) contenue à l'intérieur du corps formant capteur (4) et qui est en contact avec la surface intérieure de la membrane (3) perméable à l'hydrogène et les électrodes (9, 10, 12, 13, 17, 19), et

(b5) un soufflet (20), dont la surface intérieure est en contact avec la solution d'électrolyte (18) et dont la surface extérieure est en contact avec l'échantillon d'eau situé dans le conteneur (2), et

(c) des moyens (8) pour mesurer le courant électrique produit par l'oxydation de l'hydrogène sur l'anode (12).

2. Appareil selon la revendication 1, caractérisé en ce que la membrane (3) perméable à l'hydrogène est constituée par du Pd.

3. Appareil selon la revendication 1 ou 2, caractérisé en ce que la solution d'électrolyte (18) est une solution aqueuse de $H_2SO_4$ et de $CuSO_4$ ou de $NiSO_4$.

4. Appareil selon l'une des revendications 1 à 3, caractérisé en ce que les électrodes de référence (9, 17) sont des électrodes en $Ag/Ag_2SO_4$ ou en $Pb/PbSO_4$.

5. Appareil selon la revendication 3 ou 4, caractérisé en ce que des moyens (5, 6, 7) sont prévus pour régler l'anode (12) à un potentiel constant ($V_1$) inférieur au potentiel d'oxydation de $SO_4^{2-}$ et supérieur au potentiel d'excitation de $H_2$ par rapport à l'électrode de référence (9), et des moyens (14, 15, 16) sont prévus pour régler l'électrode de protection (13) au même potentiel ($V_1$) que l'anode (12) par rapport à l'autre électrode de référence (17).

6. Appareil selon l'une des revendications 1 à 6, caractérisé en ce que l'anode (12) et l'électrode de protection (13) sont réalisées en un métal possédant un potentiel de corrosion supérieur au potentiel d'oxydation de $H_2$.

7. Utilisation de l'appareil selon l'une des revendications 1 à 6 pour mesurer la concentration d'hydrogène atomique et moléculaire dissous.

8. Utilisation de l'appareil selon l'une des revendications 1 à 6 pour mesurer la concentration d'hydrogène dissous dans l'eau contenue dans le coeur de réacteurs nucléaires.

0 096 417

FIG. 1

FIG. 2

1